# EUROPEAN PATENT APPLICATION

(11) **EP 3 010 195 A1**
(43) Date of publication of application: **20.04.2016**
(21) Application number: 14306625.6
(22) Date of filing: 14.10.2014
(51) Int. Cl.: H04L 29/06, H04L 29/08, H04L 12/725

(54) **Adapting a network for transmitting data between end devices**

(71) Applicant: ALCATEL LUCENT, 92100 Boulogne-Billancourt (FR)
(72) Inventor: Sienel, Juergen, 70435 Stuttgart (DE); Cherubini, Davide, Dublin, 15 (IE); Hilt, Volker, 70435 Stuttgart (DE); Braun, Stefanie, 70435 Stuttgart (DE); Reimer, Joachim, 70435 Stuttgart (DE); Lugones, Diego, Dublin, 15 (IE)
(74) Representative: Mills, Julia

(57) **Abstract**

A service orchestrator and a method of adapting a network operable to transmit data between end devices, the network comprising a plurality of intermediate devices. The method comprises: analysing performance data related to: a quality of a service provided at at least one of the end devices, and at least one of transmission and processing of at least some of the data within the network; and generating and transmitting a control signal to adapt the network in response to the analysed performance data, the control signal controlling at least one of a change to at least one of the intermediate devices and a change to a route taken by data transmitted between the end devices through the network.

## Description

### FIELD OF THE INVENTION

The invention relates to the field of data communication and in particular, to adapting a network for transmitting data between end devices.

### BACKGROUND

In order to provide communication services over the Internet a set of standardized protocols such as WebRTC (web real time communication), SIP (session initiation protocol) and RTP (real-time transport protocol) have been developed. These allow end-systems to connect to each other and exchange control messages to setup a media path across which audio and video data can be exchanged. Due to technical limitations such as network address translation and business implications, the end-to-end communication often cannot operate directly end-to-end but needs support functions in both the control and media plane to be provided by intermediate network elements, such as SIP-Servers, media gateways and other middle boxes or intermediate devices which are included in the data paths. A typical system for such network supported end-to-end communication system is IMS (IP multimedia system).

However, due to the large number of intermediate network elements the quality of the transferred media (in terms of packet loss, delay, etc) is hard to maintain and may suffer. Furthermore, the use of some of these network elements such as session border controllers or media gateways break the end-to-end communication principle and reduce the ability of end devices and other middle boxes to optimize the media quality of the users.

Many of the emerging cloud applications have precise requirements on performance and reliability, and they handle increasingly massive amounts of data. Traditional network architectures and current resource management strategies in cloud infrastructures lack techniques for dealing with advanced routing and switching in complex networking environment that are needed by the ever-increasing application demand.

It would be desirable to address the above limitations and provide an improved communication system.

### SUMMARY

A first aspect of the present invention provides a method of adapting a network operable to transmit data between end devices, said network comprising a plurality of intermediate devices, said method comprising: analysing performance data related to: a quality of a service provided at at least one of said end devices, and at least one of transmission and processing of at least some of said data within said network; and generating and transmitting a control signal to adapt said network in response to said analysed performance data, said control signal controlling at least one of a change to at least one of said intermediate devices and a change to a route taken by data transmitted between said end devices through said network.

The present invention recognises that the transmission of increasing amounts of data across networks makes the control and optimisation of such systems difficult. It also recognises that although it is known to collect performance data related to the network itself, this is often used in isolation to amend the functioning of a particular device or to select a particular network path. Although this may improve the performance locally it may impact the performance elsewhere. The present invention addresses this by analysing performance data not just related to the transmission and processing of data in the network but also at the end device(s). In this regard it should be noted that the term data is used broadly in this context to cover both user data and control data or signals.

Thus, performance data such as the quality of service at an end device falling below a certain level, and/or problems within the network perhaps due to congestion at an intermediate device causing the performance there to drop, can be analysed as a whole and the network can be adapted to address any problems detected. This adapting can take the form of changing the intermediate devices functions or locations and/or the routes taken by the data and in this way the infrastructure of the network can be continually reconfigured to suit the loading of the network by the devices using it. In this way changes to the system that may be advantageous locally but provide disadvantages to other devices within the system can be avoided or at least reduced.

Thus, the present invention takes account of the system as a whole to improve performance by reconfiguring intermediate devices and routes such that the required capacity is available at appropriate points.

It should be noted that the performance data may include information such as the location and functions of the intermediate devices as well as their quality of service, and their loading and may include, for the signalling plane the number of received messages, the number of sessions, etc. and for the media plane, the number of stream terminations, latency and packet loss on the receiving and or terminating paths, while the performance data for the end user may include quality of service, data loss, change in service or function etc. The location maybe a physical/ geographical location or it may be a location related to the network topology.

In some embodiments, said analysing of said performance data is triggered by at least one of: a request for a change in service, a change in quality of service at at least one of an end device and an intermediate device, and a change in load at at least one of said intermediate devices.

The analysing of the performance data may be done periodically or in response to receiving performance data or notifications or in some embodiments it maybe triggered by certain events such as a request for a change in service received from an end device or detection or notification of a change in quality of service at the end device or at one of the intermediate devices or a change in load at at least one of the intermediate devices. In this regard, any of these events may indicate that the network traffic has changed or is about to change and that the previous configuration of the network may no longer be ideal for this traffic. Thus, in response to detection of such events, the performance data can be analysed and in response to this and taking account of the changing events, an updated configuration for the network can be determined and control signals transmitted requesting changes in data routes and/or changes in the intermediate devices.

In some embodiments, the method comprises receiving a notification when said performance data passes at least one predetermined threshold value and performing said adapting in response to said notification.

The system maybe set up such that notifications are transmitted when performance data passes predetermined thresholds and these notifications can be analysed and may trigger the generation and transmission of a control signal. Alternatively, and/or additionally, they may trigger the analysis of performance data that is stored whereupon control signals will be generated and transmitted in response to the analysed performance data that was stored and the analysed performance data that was received as the notification. It should be noted that the performance data may be individual pieces of performance data passing a threshold, or it may be logically combined performance data passing thresholds. In the latter case a notification may be sent if one of a multiple number of aggregated pieces of performance data pass particular thresholds, or in other cases if more than one of them passes its corresponding threshold.

In some embodiments, said threshold value comprises at least one of a low quality of service threshold at one of an end device and an intermediate device and a threshold loading at at least one of said intermediate devices.

The threshold value may be a number of things but it may be a quality of service threshold at one of the end devices and/or one of the intermediate devices or a threshold loading of one of the intermediate devices. In this regard, where the quality of service at an end device or an intermediate device falls below a certain level, this is an indication that the network is not functioning well for the current traffic and thus, it may be advantageous to adapt it in some way. Furthermore, if the loading at one of the intermediate devices rises above a certain level or indeed falls below a certain level, this may indicate that the intermediate device is either excess to requirements or is not coping with the current load and thus, some changes in the location and/or scaling of the intermediate device may be appropriate. It should be noted that loading of an intermediate device is an indication of the resource utilisation of that device and where the device provides several resources, the loading of each resource may be considered separately so that each of them may have threshold values that are monitored.

In some embodiments, said change to said at least one of said intermediate devices comprises at least one of: changing a location of said intermediate device, changing a function of said intermediate device, instantiating at least one new intermediate device, removing said intermediate device and scaling said intermediate device to handle a different sized load.

One way in which the network may be adapted is by changes to the intermediate devices. In this regard, where, for example they are instantiated in the cloud, multiple processing devices such as servers maybe connected together within the cloud and each processing device can be configured to perform one or more different intermediate functions. In such a case their location, function and indeed the generation of new or the removal of former intermediate devices that are no longer fully used or the scaling of the devices to handle different sized loads, can be performed by simply reconfiguring the processing devices using control signals. In this way the required network resources can be provided at suitable places to provide improved transmission and processing of data.

The intermediate devices may perform various functions that enable end devices to communicate with each other. These may include address translations, transcoding of data that is encoded in one format to a format suitable for the receiving end device, data compression and general routing procedures that allow end devices to communicate with each other.

In some embodiments, the method further comprises receiving and storing said performance data.

The performance data may be received and stored. This data may be stored within a conventional database or it may be stored within a distributed data store as used typically within the cloud. The database may simply store the data and allow access to it, or it may perform some processing of the data and transmit notifications when values or logically combined values pass thresholds.

In some embodiments, at least one of said receiving and storing steps comprises aggregating at least some of said performance data, such that performance data related to a plurality of devices is aggregated prior to storing said data.

Although, the analysis of performance data related to the whole system can provide improved performance of the network, it should be understood that where the network is large and a lot of data is handled, this performance data itself may be extremely large such that storing and analysing it may not be practicable. Thus, in some cases the performance data is aggregated prior to storing it such that performance data that is related to particular devices or particular events or particular locations may be combined in some way and variations in this aggregated performance data will provide an indication of the network performance of particular functions or at particular places or devices.

In some embodiments, said plurality of devices are at least one of a plurality of devices of a similar type, a plurality of devices of a same type, a plurality of devices running a same application and a plurality of devices using a same service.

When aggregating to provide data from a plurality of devices, it may be devices of the same or a similar type that are aggregated together or it maybe devices that run a same application where the performance of the application is to be analysed and/or it may be the devices that use the same service where the performance of the service is required to be known.

In some embodiments, said plurality of devices are devices located at least one of geographically and logically close to each other.

Alternatively and/or additionally, performance data from devices that are close to each other either geographically and/ or logically may be combined together. In this regard, it maybe convenient to analyse portions of a network serving particular geographic locations separately from the whole network, or to analyse logically similar portions of the network perhaps portions that use a same database and/or run a particular service provided by a particular network owner.

In some embodiments, said step of receiving said performance data regarding a quality of a service provided at said at least one end device comprises at least one of: periodically receiving said data from said end device and receiving an indication of a service falling below a predetermined level at said end device.

The receiving of performance data may occur in a number of ways, for example, an end device maybe configured to periodically transmit performance data to the network or the end device may be configured such that when the performance falls below a certain threshold it is transmitted. This performance data may be in the form of a notification that this threshold has been passed or it may comprise one or more indications of current performance.

In some embodiments, said at least some performance data that is analysed is data related to at least one of data transmission and processing in a portion of said network and data regarding a quality of a service provided at at least one end device connected to said portion, and said step of adapting comprises adapting said portion of said network.

As noted previously, where a network is large and a lot of data is handled then the analysis of that performance data and adapting of the network may be an onerous task. This, in some cases the network may be divided into portions and performance data related to a particular portion may be analysed and that portion adapted. This portion may be geographically divided or it may be logically divided such that portions to the networks providing communication to devices providing particular services or applications may form a portion. In this way a large network may be divided up into manageable sized portions when adapting it to improve performance.

In some embodiments, the method further comprises prior to transmitting said control signals determining from said analysed performance data an improved network configuration and generating control signals to adapt said network to provide said improved network configuration.

The analysis of the performance data may be done in a number of ways, but in some cases it is used to determine improved network configuration and control signals are generated for the adaption of the network in response to this determination step.

A second aspect of the present invention provides a computer programme operable when executed by a computer to control said computer to perform said method according to a first aspect of the present invention.

A third aspect of the present invention provides a service orchestrating device for adapting a network for transmitting data between end devices, said network comprising a plurality of intermediate devices, said service orchestrating device comprising: analysing circuitry operable to analyse performance data regarding a quality of a service provided at at least one of said end devices and performance data related to at least one of transmission and processing of at least some of said data transmitted within said network; determining circuitry operable to determine from said analysed performance data an improved network configuration and to generate at least one control signal to control changes in said network configuration; transmission circuitry operable to transmit said at least one control signal to control changes in said network , said at least one control signal controlling at least one of a change to at least one of said intermediate devices and a change to a route taken by data transmitted by said network.

A network that transmits data between end devices and has a number of intermediate devices for routing and/or processing the data such that the end devices can successfully communicate with each other may function with a service orchestrating device which analyses performance data relating to quality of service provided at the end devices and performance to data relating to the transmission and processing of the data within the network and from this, determines where the network configuration is not currently serving the data traffic particularly well and in response to this will generate control signals to adapt the network such that an improved performance is provided. Such a service orchestrating device is particularly applicable to cloud based systems where various components are configurable on different devices such that their function, their scale and their location can be changed by control signals and the network can be adapted according to need. Thus, by analysing performance data, not only from within the network but also from the end devices, problems can be identified and the network can be adapted to address them.

This adapting of the network may include instantiating new intermediate devices removing ones that are no longer heavily loaded, scaling them where their load has changed, changing their function or changing their location.

It should be noted that in some cases, in addition to adapting the data routes and/or intermediate devices, control signals may also be transmitted to end devices to adapt them to suit the current capacity and functionality of the network.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 schematically shows a network connecting end users according to an embodiment;
Figure 2 schematically shows a network connecting end users via intermediate devices according to a further embodiment;
Figure 3 schematically shows a network connecting end users which reroutes traffic to reduce latency according to an embodiment;
Figure 4 schematically shows a network providing local scaling of resources according to an embodiment;
Figure 5 shows a flow diagram illustrating steps in a method of collecting and storing performance data; and
Figure 6 shows a flow diagram illustrating steps in a method for adapting a network to suit current loading conditions.

### DESCRIPTION OF THE EMBODIMENTS

Before discussing the embodiments in any more detail, first an overview will be provided.

The current trend to move communication and network services into a virtualised environment leads to more dynamic resource utilisation patterns which are able to support more flexible workloads. Unfortunately, current solutions offer only means to adapt services in a reactive manner, i.e. in case one network element detects a bottleneck, which may trigger an individual scaling. Providing performance data which includes information of the end devices and related network elements, in some cases aggregated information, leads to faster and better adaptation of the network and as a result a better quality of experience for the user. It also helps to better utilise resources.

Embodiments propose a system that overcome many of the limitations of the prior art by collecting and consolidating data from the network elements and from the end-devices. Embodiments are especially applicable to cloud deployed communication systems. A network element or a communication service can request specific data, either for a single session or to optimize the resource utilization of the system. Using the retrieved information a service orchestrator adapts the service behaviour, by instantiating and parametrizing intermediate functions in an end-to-end improved way. Furthermore, in embodiments the security considerations of the network operator are not compromised.

In conventional systems some network elements offer some statistic measurements about the status of the network element itself, and potentially correlated elements. This information is exposed via a network management interface towards e.g. an OSS&BSS (operations and business support) system. Unfortunately each of these elements has only its local view so that an end-to-end perspective cannot be provided, especially if multiple network and service operators are involved. Furthermore, there is no information provided from the end-user terminal. Such statistics data includes e.g. for the signalling plane the number of received messages, the number of sessions, etc. and for the media plane, the number of stream termination, latency and packet loss on the receiving and or terminating path. Partially this media path information is received via a control protocol related to the connection, namely RTCP (real-time transport control protocol). As RTCP is bound to the RTP connection, it does not offer end-to-end information.

Many of the emerging cloud applications have precise requirements on performance and reliability, and they handle increasingly massive amounts of data. Traditional network architectures and current resource management strategies in cloud infrastructures lack techniques for dealing with advanced routing and switching in complex networking environment that are needed by the ever-increasing application demand.

Recent developments in Software Defined Networking (SDN) technologies are driven by different network requirements in specific areas. However, existing and proposed SDN controllers do not have visibility of the status of the end-to-end service that includes the service status.

The IETF (internet engineering taskforce) effort to optimize constrained-based routing path computation and selection in multi-service, multi-domain networks (see RFC 4655) is certainly noteworthy. However, such solution is confined to networks and does not take into consideration the service/ application seen by the end user.

Embodiments provide a service management function that instantiates and parameterizes network centric processing functions such as transcoding units, NAT traversal helpers etc. at preferred locations based both on end-terminal requirements and the proximity and location of other middle boxes. A centralized server or a distributed database collects media and control flow statistics along with end user performance data.

If during a session a network element or the end-device detects from a call flow message or other sources that a modification of the media path is required (e.g. because the device switched from 3G to a WiFi network), the element will contact the service management function that will identify all network elements that are affected from this change and notify these elements to adapt according to the setting. In case the call flow message requires a new function to be instantiated it will query the location of the neighbouring network elements and instantiate the function at a location that minimizes or at least reduces any additional end-to-end latency.

In case of virtualized service functions, e.g. in a cloud IMS system, the service management function may use information from the statistics database to determine the need to scale the system and to select the datacentre locations at which new instances should be created.

The service management function may also include network reconfiguration functionality by leveraging information about network and service status.

In summary embodiments take advantage of the information from the statistics collected both from the network and the end user to adapt the service provided by the network.

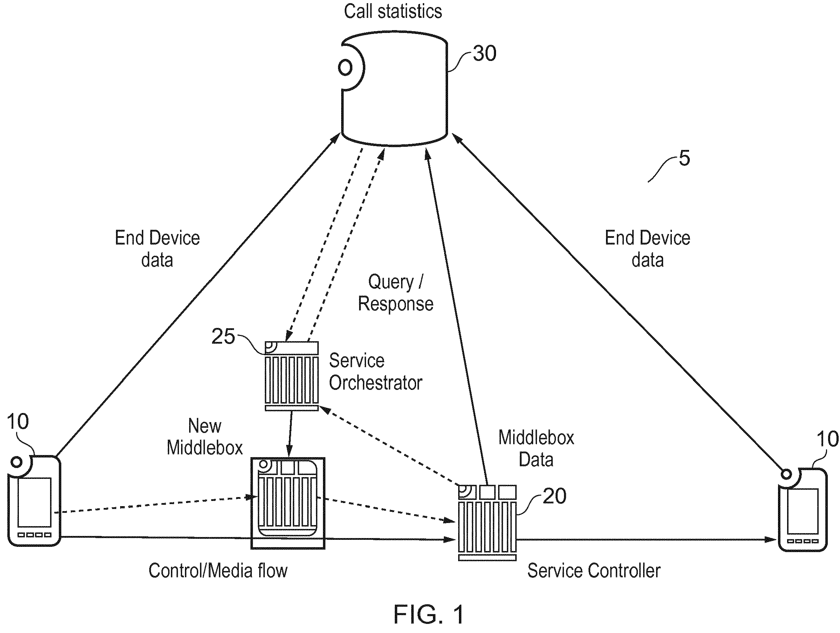

Figure 1 schematically shows an overall architecture of a network 5 connecting end devices 10 according to an embodiment. The end-devices 10 and an existing middlebox 20 collect information about an ongoing conversation and send these to a database 30. It should be noted that the database may be located on a dedicated server, or it may be distributed on multiple servers e.g. in cloud storage. During the conversation the session controller on middlebox 20 realizes that an additional function is needed, e.g., because one of the devices switches to a different network and now needs a NAT traversal function. The session controller will request a service orchestration function running on another intermediate device, service orchestrator 25, to include this additional function in the service chain of this specific service. The service orchestrator 25 requests from the database the type and location of neighbour network elements and from this determines the location of the server on which the NAT traversal function should be instantiated. Although in this embodiment the service orchestration function is shown as being on a different intermediate device to the session manager 20 in another embodiment it maybe located on the same device or alternatively it may within a cloud management system.

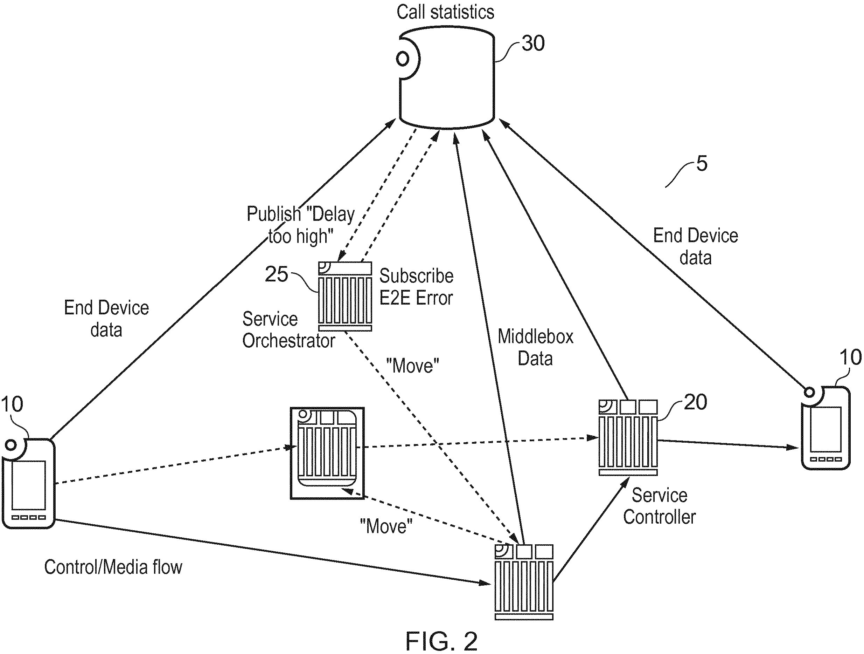

Figure 2 schematically shows end to end devices 10 communicating across a network 5 according to a further embodiment. In a first scenario all RTCP messages of all end-devices 10 and middleboxes 20 participating in the end-to-end media processing send their statistics information to the database 30. A session manager running on a middlebox 20 and/or a service orchestrator 25 becomes aware if the total end-to-end latency, the packet loss or the delay jitter becomes too high for an acceptable end-user service quality. This can be realized e.g. by a publish/subscribe mechanism which is offered by the database 30. Where this occurs a notification is sent to the service orchestrator 25 for example, and the service orchestrator may in response to this decide to switch the system to a different compression format by transmitting a control signal to the device performing the compression and this lowers the burden for the intermediate processing, alternatively, as shown in Figure 2 the middlebox functionality may be shifted to another middlebox device. The service orchestrator may analyse performance data of the system prior to determining a suitable change in the network to address the issue.

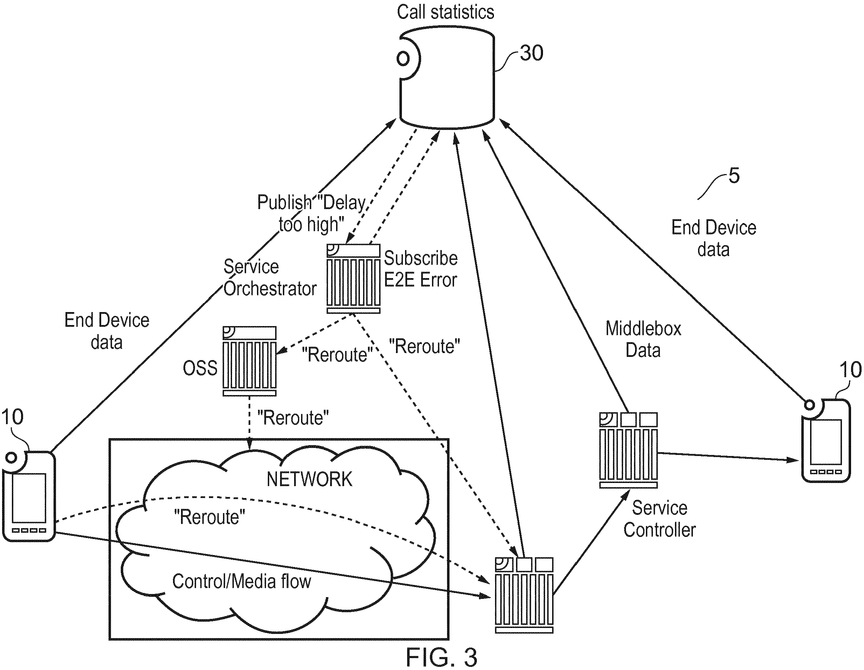

Figure 3 shows a similar system in which end-to-end performance degradation is also addressed, but which in this case, instead of shifting the functionality to another server (usually in another location), the service orchestrator will interact with the OSS (or the NMS network management system) in order to compute and select a "better" path for the service. The path computation/ selection capability can either be part of the OSS/NMS (e.g., a PCE (path computation element)+ SDN (software defined networking) controller) or can be integrated directly into the service orchestrator 25. In the latter case the service orchestrator must be able to communicate directly with the network devices (e.g., the core routers). In either case the service orchestrator detects a fall in performance either by analysing performance data or receiving notifications and in response to the performance data it will determine that a different routing would be beneficial and will arrange such a routing using control signals.

In another example the end-devices post information about network quality (bearer signal strength) and or terminal location to the database 30. The session manager 20 may subscribe to events indicating a hand-over operation in the mobile network, a switch between networks (e.g., from the mobile operator to the home WiFi) and is able to prepare the service functions accordingly. So for session mobility a second packet-to-packet gateway can be initiated and signalled to the end-device in advance in order to provide seamless session mobility without service disruption.

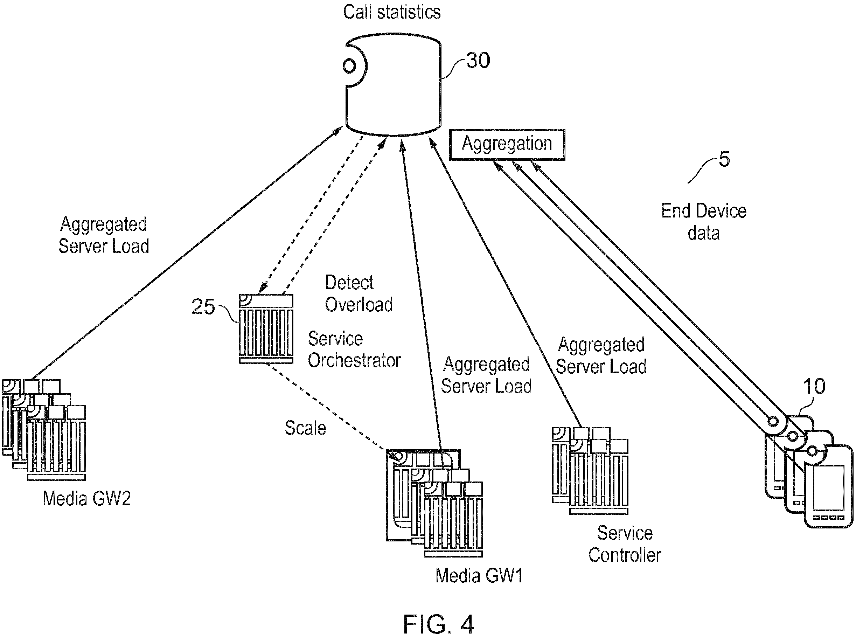

Figure 4 shows a scenario in which aggregated terminal and server information is used to manage dynamic scaling of service elements. The database 30 collects error response statistics from the control plane (both terminal and network elements) in order to detect bottlenecks in the processing path and scale out instances. This might include a traffic mix for different service types belonging to multiple sessions on the same terminal or aggregated across all terminals handled by the same middle box. By also evaluating the device type and the geographical distribution of the devices, the service orchestrator 25 is able to scale out dynamically one or multiple service elements in order to adapt to a changing workload.

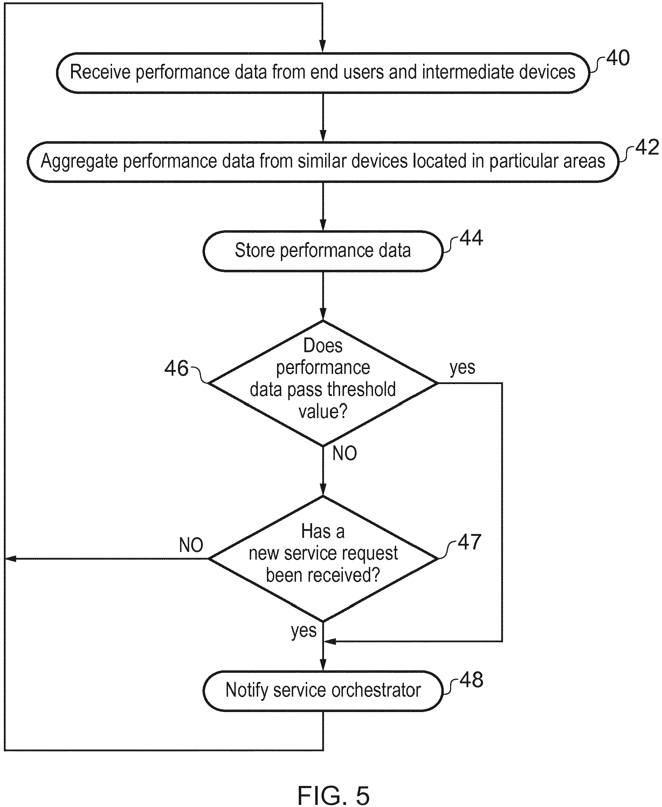

Figure 5 shows a flow diagram illustrating steps in a method of collecting and storing performance data. Initially performance data is received 40 from devices within the network and performance data from similar devices within a particular area are aggregated 42 and the aggregated data is stored 44. This aggregation significantly decreases the amount of data stored. The data is analysed to determine whether any of the aggregated data passes threshold values, in this case has the performance of the aggregated devices fallen below a certain value 46? If so a notification is sent to the service orchestrator 48. In addition changes in service requirements of end users are also monitored and where a change in service is detected 47 a notification is also transmitted to the service orchestrator 48.

It should be noted that although the system above was configured to notify on aggregate data passing thresholds, in other embodiments it may notify on the performance data of an individual device passing a threshold or it may notify when a logical combination of aggregated data passes particular threshold(s).

In either case in this embodiment the system is operating in a publish/ subscribe manner, whereby the system is configured to notify a service orchestrator when particular performance data passes particular threshold(s).

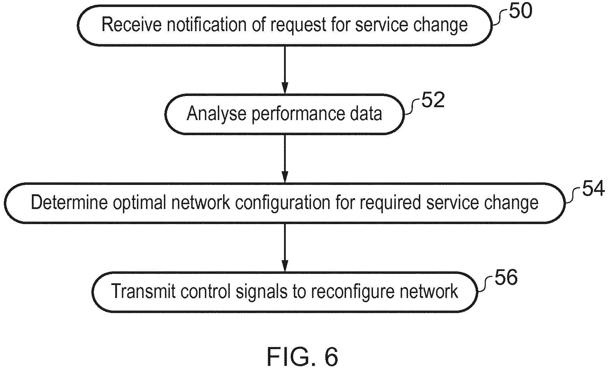

Figure 6 shows a flow diagram illustrating steps in a method for adapting a network to suit current data traffic conditions performed at a service orchestrator within the network. In this embodiment a service orchestrator will receive notifications from a performance database 50 indicating changes in conditions which may require a change in the network if the performance of the network is to remain optimal or near optimal. In response to this the service orchestrator will analyse the performance data 52 in the light of the indicated changes and determine a network configuration that would be effective for such required service changes 54 and will transmit control signals 56 to adapt the network where it considers these will improve performance. These control signals may control a change in data path, a change in end user functionality and/or a change in intermediate device functionality, scale and/or location.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices maybe, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of adapting a network operable to transmit data between end devices, said network comprising a plurality of intermediate devices, said method comprising:
analysing performance data related to: a quality of a service provided at at least one of said end devices, and at least one of transmission and processing of at least some of said data within said network; and
generating and transmitting a control signal to adapt said network in response to said analysed performance data, said control signal controlling at least one of a change to at least one of said intermediate devices and a change to a route taken by data transmitted between said end devices through said network.

2. A method according to claim 1, wherein said analysing of said performance data is triggered by at least one of: a request for a change in service, a change in quality of service at at least one of an end device and an intermediate device, and a change in load at at least one of said intermediate devices.

3. A method according to claim 1, comprising receiving a notification when said performance data passes at least one predetermined threshold value and performing said adapting in response to said notification.

4. A method according to claim 3, wherein said threshold value comprises at least one of a low quality of service threshold at one of an end device and an intermediate device and a threshold loading at at least one of said intermediate devices.

5. A method according to any preceding claim, wherein said change to said at least one of said intermediate devices comprises at least one of: changing a location of said intermediate device, changing a function of said intermediate device, instantiating at least one new intermediate device, removing said intermediate device and scaling said intermediate device to handle a different sized load.

6. A method according to any preceding claim, further comprising:
receiving and storing said performance data.

7. A method according to claim 6, wherein at least one of said receiving and storing step comprises aggregating at least some of said performance data, such that performance data related to a plurality of devices is aggregated prior to storing said data.

8. A method according to claim 7, wherein said plurality of devices are at least one of a plurality of devices of a similar type, a plurality of devices of a same type, a plurality of devices running a same application and a plurality of devices using a same service.

9. A method according to claim 7 or 8, wherein said plurality of devices are devices located at least one of geographically and logically close to each other.

10. A method according to anyone of claims 6 to 9, wherein said step of receiving said performance data regarding a quality of a service provided at said at least one end device comprises at least one of: periodically receiving said data from said end device and receiving an indication of a service falling below a predetermined level at said end device.

11. A method according to any preceding claim, wherein said at least some performance data that is analsyed is data related to at least one of data transmission and processing in a portion of said network and data regarding a quality of a service provided at at least one end device connected to said portion, and said step of adapting comprises adapting said portion of said network.

12. A method according to any preceding claim, further comprising prior to transmitting said control signals determining from said analysed performance data an improved network configuration and generating control signals to adapt said network to provide said improved network configuration.

13. A computer program operable when executed by a computer to control said computer to perform said method according to any one of claims 1 to 12.

14. A service orchestrating device for adapting a network for transmitting data between end devices, said network comprising a plurality of intermediate devices, said service orchestrating device comprising:
analysing circuitry operable to analyse performance data regarding a quality of a service provided at at least one of said end devices and performance data related to at least one of transmission and processing of at least some of said data transmitted within said network;
determining circuitry operable to determine from said analysed performance data an improved network configuration and to generate at least one control signal to control changes in said network configuration;
transmission circuitry operable to transmit said at least one control signal to control changes in said network , said at least one control signal controlling at least one of a change to at least one of said intermediate devices and a change to a route taken by data transmitted by said network.

15. A service orchestrating device according to claim 14, wherein said at least one control signal is configured to change said at least one of said intermediate devices by at least one of: changing a location of said intermediate device, changing a function of said intermediate device, instantiating at least one new intermediate device, removing said intermediate device and scaling said intermediate device to handle a different sized load.

## Amended claims

### Amended claims in accordance with Rule 137(2) EPC.

1. A method of adapting a network operable to transmit data between end devices, said network comprising a plurality of intermediate devices, said method comprising:
receiving (40) and storing (44) performance data related to: a quality of a service provided at at least one of said end devices, and at least one of transmission and processing of at least some of said data within said network, wherein at least one of said receiving and storing step comprises aggregating (42) at least some of said performance data, such that performance data related to a plurality of devices is aggregated prior to storing said data;
analysing (52) said performance data; and
generating and transmitting (56) a control signal to adapt said network in response to said analysed performance data, said control signal controlling at least one of a change to at least one of said intermediate devices and a change to a route taken by data transmitted between said end devices through said network.

2. A method according to claim 1, wherein said analysing of said performance data is triggered by at least one of: a request for a change in service (47), a change in quality of service (46) at at least one of an end device and an intermediate device, and a change in load (46) at at least one of said intermediate devices.

3. A method according to claim 1, comprising receiving a notification when said performance data passes at least one predetermined threshold value and performing said adapting in response to said notification.

4. A method according to claim 3, wherein said threshold value comprises at least one of a low quality of service threshold at one of an end device and an intermediate device and a threshold loading at at least one of said intermediate devices.

5. A method according to any preceding claim, wherein said change to said at least one of said intermediate devices comprises at least one of: changing a location of said intermediate device, changing a function of said intermediate device, instantiating at least one new intermediate device, removing said intermediate device and scaling said intermediate device to handle a different sized load.

6. A method according to any preceding claim wherein said plurality of devices are at least one of a plurality of devices of a similar type, a plurality of devices of a same type, a plurality of devices running a same application and a plurality of devices using a same service.

7. A method according to any preceding claim, wherein said plurality of devices are devices located at least one of geographically and logically close to each other.

8. A method according to any preceding claim, wherein said step of receiving said performance data regarding a quality of a service provided at said at least one end device comprises at least one of: periodically receiving said data from said end device and receiving an indication of a service falling below a predetermined level at said end device.

9. A method according to any preceding claim, wherein said at least some performance data that is analsyed is data related to at least one of data transmission and processing in a portion of said network and data regarding a quality of a service provided at at least one end device connected to said portion, and said step of adapting comprises adapting said portion of said network.

10. A method according to any preceding claim, further comprising prior to transmitting said control signals determining from said analysed performance data an improved network configuration and generating control signals to adapt said network to provide said improved network configuration.

11. A computer program operable when executed by a computer to control said computer to perform said method according to any one of claims 1 to 10.

12. A service orchestrating device (25) for adapting a network for transmitting data between end devices (10), said network comprising a plurality of intermediate devices (20), said service orchestrating device (25) comprising:
analysing circuitry operable to analyse performance data regarding a quality of a service provided at at least one of said end devices and performance data related to at least one of transmission and processing of at least some of said data transmitted within said network, wherein at least some of said performance data comprises aggregated performance data where performance data related to a plurality of devices has been aggregated;
determining circuitry operable to determine from said analysed performance data an adapted network configuration and to generate at least one control signal to control changes in said network configuration;
transmission circuitry operable to transmit said at least one control signal to control changes in said network, said at least one control signal controlling at least one of a change to at least one of said intermediate devices and a change to a route taken by data transmitted by said network.

13. A service orchestrating device according to claim 12, wherein said at least one control signal is configured to change said at least one of said intermediate devices by at least one of: changing a location of said intermediate device, changing a function of said intermediate device, instantiating at least one new intermediate device, removing said intermediate device and scaling said intermediate device to handle a different sized load.
